# EUROPÄISCHE PATENTANMELDUNG

(11) **EP 3 916 419 A1**
(43) Veröffentlichungstag der Anmeldung: **01.12.2021**
(21) Anmeldenummer: 20176748.0
(22) Anmeldetag: 27.05.2020
(51) Int. Cl.: G01S 5/14

(54) **VERFAHREN ZUM BETRIEB EINES FUNKORTUNGSSYSTEMS UND BASISSTATION**

(71) Anmelder: Siemens Aktiengesellschaft, 80333 München (DE)
(72) Erfinder: Plonka, Reiner, 90768 Fürth (DE); Werner, Andreas, 01217 Dresden (DE)

(57) **Zusammenfassung**

Die Erfindung betrifft ein Funkortungssystem, bei dem eine Position eines Transponders (201-203) mittels mehrerer Basisstationen (101-105) des Funkortungssystems bzw. weiterer Transponder anhand von Funksignallaufzeiten erfasst wird. Dabei sind die Basisstationen jeweils an einer vorgegebenen Position angeordnet. Zumindest ausgewählte Basisstationen (101-102) umfassen jeweils eine Sensoreinrichtung, die an der vorgegebenen Position der jeweiligen Basisstation zumindest einen für die vorgegebene Position charakteristischen optischen, elektro-magnetischen, induktiven bzw. kapazitiven Referenz-Messwert erfasst. Die Sensoreinrichtungen ermitteln während des Betriebs des Funkortungssystems jeweils zyklisch bzw. fortlaufend aktuelle Messwerte und vergleichen diese mit dem jeweiligen Referenz-Messwert. Die Basisstationen bzw. eine mit den Basisstationen verbundene Überwachungseinrichtung signalisieren jeweils bei einer Abweichung des aktuellen Messwerts vom jeweiligen Referenz-Messwert eine Warnung.

## Beschreibung

Die vorliegende Erfindung betrifft ein Verfahren zum Betrieb eines Funkortungssystems, insbesondere eines Real-time Locating System (RTLS), und eine Basisstation zu dessen Durchführung.

Funkbasierte Ortungsvorrichtungen können beispielsweise auf RFID-Tags (radio-frequency identification) basieren, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektro-magnetischen Wechselfeldes ein Anfragesignal aus. Einerseits dient dieses elektro-magnetische Wechselfeld zur Energieversorgung insbesondere passiv betriebener RFID-Tags, die keine eigene Energiequelle aufweisen. Andererseits wird das elektro-magnetische Wechselfeld durch RFID-Tags zur Übermittlung eines Antwortsignals moduliert, beispielsweise durch Lastmodulation oder Variierung ihrer Antennenimpedanz.

Funkortungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Funkortungssysteme zu schwerwiegenden Auswirkungen führen, im ungünstigsten Fall zu einem Stillstand eines Automatisierungssystems.

Aus DE 10 2009 008174 A1 ist ein Verfahren zur Ermittlung von Entfernung, Geschwindigkeit und Bewegungsrichtung eines RFID-Transponders bekannt, bei dem der RFID-Transponder auf übliche Weise mittels eines RFID-Lesegeräts abgefragt wird. Hierzu sendet das RFID-Lesegerät ein phasenweise moduliertes Versorgungsträgersignal aus. Ein Radarmodul sendet gleichzeitig ein Radarsignal aus, das vom RFID-Transponder empfangen und reflektiert wird. Das Versorgungsträgersignal und das Radarsignal weisen unterschiedliche Frequenzen auf. Das reflektierte Radarsignal wird wiederum vom Radarmodul empfangen. Aus dem reflektierten empfangenen Radarsignal wird eine Position des RFID-Transponders ermittelt. Das Radarsignal wird insbesondere dann ausgesendet, wenn auf das Versorgungsträgersignal keine Abfragedaten aufmoduliert werden.

In EP 3 031 039 A1 ist ein RFID-basiertes Positionserfassungssystem mit einem an einem zu erfassenden Objekt angebrachten RFID-Tag beschrieben, das mittels eines niederfrequenten Wecksignals aus einem Niedrigenergiemodus geweckt werden kann. Das Wecksignal umfasst Positionsinformationen, die einem das RFID-Tag mittels des Wecksignals erfassenden RFID-Lesegerät zugeordnet sind. Nach Aufwecken des RFID-Tags durch Empfang des Wecksignals erzeugt das RFID-Tag ein hochfrequentes Antwortsignal, das einen Identifizierungscode des RFID-Tags und die mittels des Wecksignals übermittelten Positionsinformationen umfasst.

Die ältere europäische Patentanmeldung mit dem Anmeldeaktenzeichen 19200472.9 betrifft eine funkbasierte bzw. optische Objektidentifizierungsvorrichtung, die über eine Geräteschnittstelle mit einem Transponder eines Funkortungssystems verbunden wird, der an einer ausgewählten Stelle der Objektidentifizierungsvorrichtung angeordnet ist. Bei einer Erfassung seiner Position übermittelt der Transponder eine Geräteadresse bzw. einen Geräteidentifikator der Objektidentifizierungsvorrichtung an Basisstationen bzw. weitere Transponder des Funkortungssystems. Diese Informationen werden an ein der Objektidentifizierungsvorrichtung zugeordnetes Projektierungs- bzw. Überwachungssystem übermittelt, das anhand der übermittelten Position des Transponders und der Geräteadresse bzw. des Geräteidentifikators dem Transponder im Projektierungs- bzw. Überwachungssystem zugeordnete Ortsinformationen validiert, ergänzt bzw. korrigiert.

Bei einer Installation von Basisstationen, insbesondere RTLS-Gateways, für Funkortungssystems ist es wesentlich, dass die Basisstationen nach ihrer Positionierung bzw. Inbetriebnahme nicht mehr versetzt werden. Bei nachträglich geänderten Positionen der Basisstationen werden Positionen zu ortender Objekte nicht mehr richtig berechnet, wodurch schwerwiegende Folgen entstehen können. Um dies zu vermeiden, wird üblicherweise regelmäßig eine aktualisierte Vermessung der Positionen der Basisstationen vorgenommen. Derartige Überprüfungen verursachen neben temporären betrieblichen Störungen erhebliche Kosten.

Der vorliegenden Erfindung liegt daher die Aufgabe zugrunde, ein Verfahren zum Betrieb eines Funkortungssystems zu schaffen, das auf einer zuverlässigen und genauen Positionierung von Basisstationen des Funkortungssystems basiert, sowie zur Durchführung des Verfahrens geeignete Mittel bzw. Realisierungen anzugeben.

Diese Aufgabe wird erfindungsgemäß durch ein Verfahren mit den in Anspruch 1 angegebenen Merkmalen und durch eine Basisstation mit den in Anspruch 11 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Betrieb eines Funkortungssystems wird eine Position eines Transponders mittels mehrerer Basisstationen des Funkortungssystems bzw. mittels weiterer Transponder anhand von Funksignallaufzeiten erfasst. Dabei sind die Basisstationen jeweils an einer genau vermessenen bzw. vorgegebenen Position angeordnet. Zumindest eine Vielzahl der Basisstationen umfasst bzw. ausgewählte Basisstationen umfassen jeweils eine Sensoreinrichtung, die an der vorgegebenen Position der jeweiligen Basisstation zumindest einen für die vorgegebene Position charakteristischen optischen, elektro-magnetischen, induktiven bzw. kapazitiven Referenz-Messwert erfasst. Vorzugsweise umfassen sämtliche Basisstationen jeweils eine solche Sensoreinrichtung.

Erfindungsgemäß ermitteln die Sensoreinrichtungen während des Betriebs des Funkortungssystems jeweils zyklisch bzw. fortlaufend aktuelle Messwerte und vergleichen diese mit dem jeweiligen Referenz-Messwert. Bei einer Abweichung des aktuellen Messwerts vom jeweiligen Referenz-Messwert signalisieren die Basisstationen bzw. eine mit den Basisstationen verbundene Überwachungseinrichtung jeweils eine Warnung. Auf diese Weise können potentielle Ungenauigkeitsquellen frühzeitig und gezielt identifiziert werden, um anschließend Maßnahmen zur Problembehebung einzuleiten, insbesondere eine aktualisierte Vermessung der Position der jeweiligen Basisstation oder eine Platzierung auf die vorgegebene Position. Entsprechend bisherigen Lösungen würde entsprechende Probleme im ungünstigsten Fall erst bei einer turnusmäßigen Vermessung der Positionen der Basisstationen entdeckt.

Dadurch dass ungeplant veränderte Positionen sofort erkannt werden, können mit der vorliegenden Erfindung erhebliche Kosten für manuelle Nachmessungen eingespart werden. Zudem werden kritischen Situationen infolge ungenau ermittelter Positionen der Transponder auf eine Zeitdauer zwischen Veränderung und Nachmessung beschränkt. Vorzugsweise wird auf die Warnung ein Auftrag zur Korrektur einer Anordnung bzw. erfassten Position der jeweiligen Basisstation erzeugt. Ein solcher Auftrag kann beispielsweise mittels einer Meldung an Betriebsführungs- bzw. Wartungspersonal für das Funkortungssystem übermittelt werden.

Entsprechend einer bevorzugten Ausgestaltung der vorliegenden Erfindung ist das Funkortungssystem ein zumindest RFID-basiertes Real-time Locating System. Außerdem erfassen die Sensorvorrichtungen den Referenz-Messwert jeweils bei einer Inbetriebnahme der jeweiligen Basisstation. Somit kann eine zuverlässige Ermittlung des jeweiligen Referenz-Messwerts sichergestellt werden. Entsprechend einer weiteren Ausgestaltung der vorliegenden Erfindung wird die Warnung durch die Basisstationen bzw. durch eine mit den Basisstationen verbundene Überwachungseinrichtung jeweils nur bei einer Abweichung des aktuellen Messwerts vom jeweiligen Referenz-Messwert signalisiert, wenn diese einen vorgegebenen Schwellwert überschreitet. Auf diese Weise können geringfügige, temporäre Abweichungen vom Referenz-Messwert ausgefiltert werden, insbesondere wenn diese zu keinen signifikanten Änderungen der ermittelten Positionen der Transponder führen.

Die Sensoreinrichtung kann beispielsweise jeweils zumindest eine Kamera, einen optischen Sensor, einen Laserscanner, einen Funkfeldsensor, einen Radarsensor bzw. einen induktiven oder kapazitiven Sensor umfassen. Vielfach umfassen optische Sensoren zweidimensionale lichtempfindliche Sensoren mit Linsensystemen, die reale Gegenstände in eine Bildebene projizieren. Entsprechend einer bevorzugten Ausgestaltung der vorliegenden Erfindung wird mittels der Kamera bei Inbetriebnahme eine Referenz-Aufnahme erfasst, mit der zyklisch bzw. fortlaufend erfasste Bild-Aufnahmen verglichen werden. Dabei stellt die Referenz-Aufnahme einen Referenz-Messwert dar, während die zyklisch bzw. fortlaufend erfassten Bild-Aufnahmen die aktuellen Messwerte darstellen. Zusätzlich oder alternativ hierzu kann mittels des induktiven oder kapazitiven Sensors ein Referenz-Messwert an einer Befestigungs- oder Kontaktfläche der jeweiligen Basisstation ermittelt werden. Je nach Anwendung individuellen Anforderungen bestehen somit mehrere zuverlässige Optionen zur Erfassung eines Referenz-Messwerts und dessen Abgleich mit aktuellen Messwerten.

Die erfindungsgemäße Basisstation für ein Funkortungssystem ist zur Durchführung eines Verfahrens entsprechend vorangehenden Ausführungen vorgesehen und dafür ausgestaltet und eingerichtet, zusammen mit weiteren Basisstationen eine Position eines Transponders anhand von Funksignallaufzeiten zu ermitteln. Dabei sind die Basisstationen jeweils an einer vorgegebenen Position angeordnet. Außerdem umfasst die Basisstation eine Sensoreinrichtung, die dafür ausgestaltet und eingerichtet ist, an der vorgegebenen Position der Basisstation zumindest einen für die vorgegebene Position charakteristischen optischen, elektro-magnetischen, induktiven bzw. kapazitiven Referenz-Messwert zu erfassen. Darüber hinaus ist Sensoreinrichtung dafür ausgestaltet und eingerichtet, während des Betriebs des Funkortungssystems jeweils zyklisch bzw. fortlaufend aktuelle Messwerte zu ermitteln und diese mit dem Referenz-Messwert zu vergleichen. Des Weiteren ist die Basisstation dafür ausgestaltet und eingerichtet, bei einer Abweichung des aktuellen Messwerts vom Referenz-Messwert eine Warnung zu signalisieren bzw. eine Meldung an eine Überwachungseinrichtung zur dortigen Signalisierung einer Warnung zu übermitteln.

Die vorliegende Erfindung wird nachfolgend an einem Ausführungsbeispiel anhand der Zeichnung näher erläutert. Es zeigt
- Figur 1: Funkortungssystem mit mehreren Basisstationen für ein industrielles Automatisierungssystem,
- Figur 2: eine Basisstation des Funkortungssystems gemäß Figur 1 mit einer Sensoreinrichtung zur Überwachung einer Referenzposition der Basisstation,
- Figur 3: eine Basisstation mit einer alternativen Sensoreinrichtung zur Überwachung der Referenzposition der Basisstation.

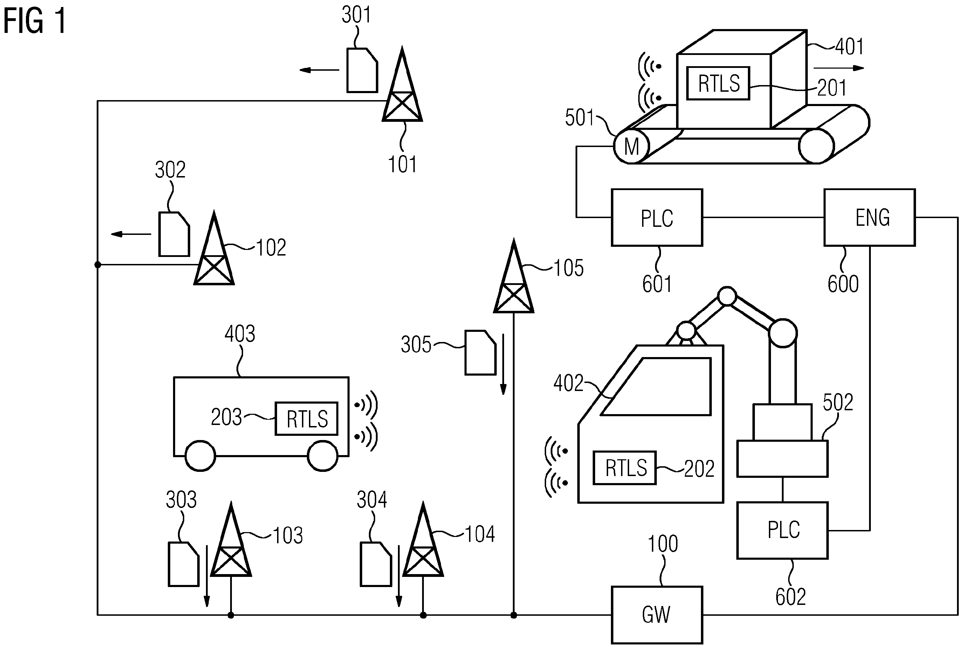

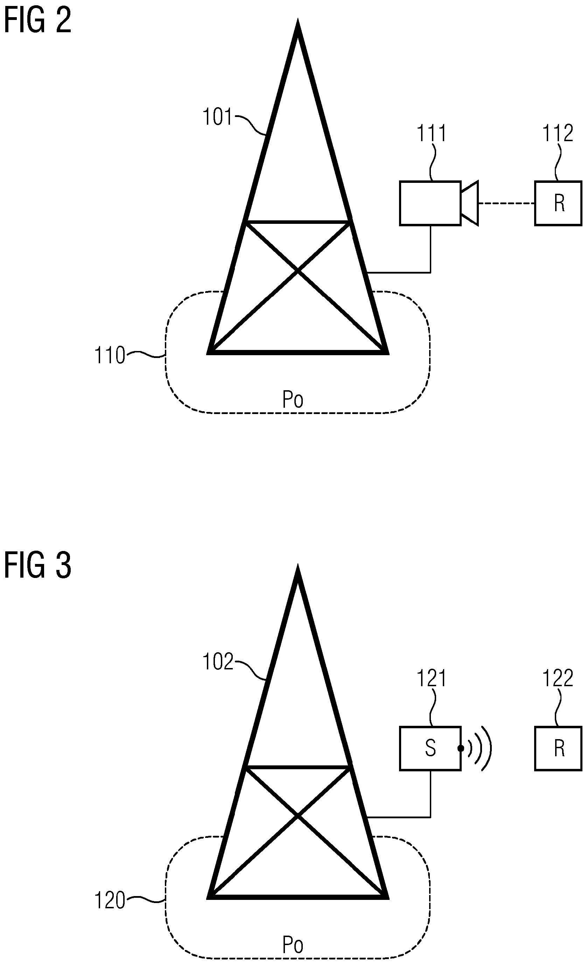

Das in Figur 1 dargestellte Funkortungssystem ist im vorliegenden Ausführungsbeispiel ein UWB- bzw. RFID-basiertes Real-time Locating System (RTLS), dass mehrere Basisstationen 101-105 umfasst. Durch die Basisstationen 101-105 werden anhand von Funksignallaufzeiten Positionen von RTLS-Transpondern 201-203 erfasst, die an zu ortenden Gegenständen angebracht sind. Zur Ortung eines RTLS-Transponders können neben den Basisstationen auch jeweils andere Transponder für eine Funksignallaufzeit-basierte Abstandsmessung verwendet werden. Entsprechend Figur 2 und 3 sind die Basisstationen 101-105 jeweils an einer vorgegebenen Position 110, 120 angeordnet.

Mittels eines ersten RTLS-Transponders 201 wird beispielsweise ein Stückgut 401 auf einem Transportband überwacht, dessen Antrieb 501 durch eine erste speicherprogrammierbare Steuerung 601 gesteuert wird. Ein zweiter RTLS-Transponder 202 ist im vorliegenden Ausführungsbeispiel an einem Fahrzeugteil 402 befestigt, das in einer Fahrzeugfertigungslinie durch einen Roboter 502 transportiert und montiert wird. Der Roboter wird durch eine zweite speicherprogrammierbare Steuerung 602 gesteuert, die ebenso wie die erste speicherprogrammierbare Steuerung 601 mit einem Engineering-System 600 verbunden ist. Durch das Engineering-System 600 werden u.a. die speicherprogrammierbaren Steuerungen 601, 602 und das Funkortungssystem projektiert bzw. überwacht.

Das Funkortungssystem dient im vorliegenden Ausführungsbeispiel außerdem zur Überwachung der Position eines autonomen Fahrzeugs 403, mit denen Produktionsgüter zur Fahrzeugfertigungslinie transportiert werden. An dem autonomen Fahrzeug 403 ist zur Ortung ein dritter RTLS-Transponder 203 angeordnet. Neben UWB- bzw. RFID-Komponenten kann das Funkortungssystem beispielsweise zusätzliche Komponenten zur GPS-, WLAN- oder Inertialsensorik-basierten Ortung umfassen. Dabei können mehrere oder alle dieser Komponenten in die RTLS-Transponder 201-203 und Basisstationen 101-105 des Funkortungssystems integriert sein.

Die Basisstationen 101-105 sind mit einer als Gateway 100 ausgestalteten Auswertevorrichtung des Funkortungssystems verbunden. Die RTLS-Transponder 201-203 übermitteln vorzugsweise jeweils einen dem jeweils zu ortenden Gegenstand zugeordneten Objektidentifikator an die Basisstationen 101-105. Auf dieser Basis senden die Basisstationen 101-105 Datagramme 301-305, die erfasste Signallaufzeitinformationen und Objektidentifikatoren umfassen, zur Auswertung an das Gateway 100. Das Gateway 100 des Funkortungssystems übermittelt wiederum die erfassten Positionen der RTLS-Transponder 201-203 einschließlich der Objektidentifikatoren an das Engineering-System 600. Dementsprechend ist das Engineering-System 600 dafür konfiguriert, anhand der übermittelten Positionen der RTLS-Transponder 201-203 einschließlich der Objektidentifikatoren den RTLS-Transpondern 201-203 im Engineering-System 600 jeweils zugeordnete Ortsinformationen zu validieren.

Entsprechend Figur 2 und 3 umfassen zumindest ausgewählte Basisstationen 101-102 jeweils eine Sensoreinrichtung 111, 121, die an der vorgegebenen Position 110, 120 der jeweiligen Basisstation zumindest einen für die vorgegebene Position 110, 120 charakteristischen optischen, elektro-magnetischen, induktiven bzw. kapazitiven Referenz-Messwert erfasst. Grundsätzlich können sämtliche Basisstationen 101-105 jeweils eine Sensoreinrichtung 111, 121 umfassen. Vorteilhafterweise erfassen die Sensorvorrichtungen 111, 121 den Referenz-Messwert jeweils bei einer Inbetriebnahme der jeweiligen Basisstation 101-105. Während des Betriebs des Funkortungssystems ermitteln die Sensoreinrichtungen 111, 121 jeweils zyklisch bzw. fortlaufend aktuelle Messwerte und vergleichen diese mit dem jeweiligen Referenz-Messwert.

Die Sensoreinrichtungen 111, 121 können beispielsweise jeweils zumindest eine Kamera, einen optischen Sensor, einen Laserscanner, einen Funkfeldsensor, einen Radarsensor bzw. einen induktiven oder kapazitiven Sensor umfassen. Bei dem in Figur 2 dargestellten Ausführungsbeispiel umfasst die Sensoreinrichtung 111 eine Kamera, mittels der bei Inbetriebnahme eine Referenz-Aufnahme einer Referenz-Marke 112 erfasst wird. Diese Referenz-Aufnahme wird mit zyklisch bzw. fortlaufend erfassten Bild-Aufnahmen der Referenz-Marke 112 verglichen. Dabei stellt die Referenz-Aufnahme einen Referenz-Messwert dar, während die zyklisch bzw. fortlaufend erfassten Bild-Aufnahmen die aktuellen Messwerte darstellen. Entsprechend der in Figur 3 dargestellten alternativen Ausführungsform umfasst die Sensoreinrichtung 121 einen induktiven oder kapazitiven Sensor, mittels dessen ein Referenz-Messwert an einer Befestigungs- oder Kontaktfläche der Basisstation 102 bzw. ein Referenz-Messwert an einer induktiven oder kapazitiven Referenz-Marke 122 ermittelt wird.

Die Basisstationen 101-105 bzw. eine mit den Basisstationen verbundene Überwachungseinrichtung, insbesondere das Gateway 100, signalisieren jeweils bei einer Abweichung des aktuellen Messwerts vom jeweiligen Referenz-Messwert eine Warnung. Diese Warnung kann beispielsweise optisch, akustisch oder per Meldung signalisiert werden. Grundsätzlich kann vorgesehen sein, dass die Basisstationen 101-105 bzw. eine mit den Basisstationen verbundene Überwachungseinrichtung die Warnung jeweils nur bei einer Abweichung des aktuellen Messwerts vom jeweiligen Referenz-Messwert signalisieren, wenn diese einen vorgegebenen Schwellwert überschreitet. Vorzugsweise wird auf die Warnung ein Auftrag zur Korrektur einer Anordnung bzw. einer erfassten Position der jeweiligen Basisstation erzeugt. Ein solcher Auftrag kann insbesondere mittels einer Meldung an Betriebsführungs- bzw. Wartungspersonal für das Funkortungssystem übermittelt werden.

## Patentansprüche

1. Verfahren zum Betrieb eines Funkortungssystems, bei dem
- eine Position eines Transponders (201-203) mittels mehrerer Basisstationen (101-105) des Funkortungssystems und/oder weiterer Transponder anhand von Funksignallaufzeiten erfasst wird, wobei die Basisstationen jeweils an einer vorgegebenen Position (110, 120) angeordnet sind,
- zumindest ausgewählte Basisstationen (101-102) jeweils eine Sensoreinrichtung (111, 121) umfassen, die an der vorgegebenen Position der jeweiligen Basisstation zumindest einen für die vorgegebene Position charakteristischen optischen, elektro-magnetischen, induktiven und/oder kapazitiven Referenz-Messwert erfasst,
- die Sensoreinrichtungen während des Betriebs des Funkortungssystems jeweils zyklisch und/oder fortlaufend aktuelle Messwerte ermitteln und diese mit dem jeweiligen Referenz-Messwert vergleichen,
- die Basisstationen und/oder eine mit den Basisstationen verbundene Überwachungseinrichtung jeweils bei einer Abweichung des aktuellen Messwerts vom jeweiligen Referenz-Messwert eine Warnung signalisieren.

2. Verfahren nach Anspruch 1,
bei dem die Sensorvorrichtungen den Referenz-Messwert jeweils bei einer Inbetriebnahme der jeweiligen Basisstation erfassen.

3. Verfahren nach einem der Ansprüche 1 oder 2,
bei dem die Basisstationen und/oder eine mit den Basisstationen verbundene Überwachungseinrichtung die Warnung jeweils nur bei einer Abweichung des aktuellen Messwerts vom jeweiligen Referenz-Messwert signalisieren, wenn diese einen vorgegebenen Schwellwert überschreitet.

4. Verfahren nach einem der Ansprüche 1 bis 3,
bei dem die Sensoreinrichtung jeweils zumindest eine Kamera, einen optischen Sensor, einen Laserscanner, einen Funkfeldsensor, einen Radarsensor und/oder einen induktiven oder kapazitiven Sensor umfasst.

5. Verfahren nach Anspruch 4,
bei dem mittels der Kamera bei Inbetriebnahme eine Referenz-Aufnahme erfasst wird, mit der zyklisch und/oder fortlaufend erfasste Bild-Aufnahmen verglichen werden, wobei die Referenz-Aufnahme einen Referenz-Messwert darstellt und wobei die zyklisch und/oder fortlaufend erfassten Bild-Aufnahmen die aktuellen Messwerte darstellen.

6. Verfahren nach einem der Ansprüche 4 oder 5,
bei dem mittels des induktiven oder kapazitiven Sensors ein Referenz-Messwert an einer Befestigungs- oder Kontaktfläche der jeweiligen Basisstation ermittelt wird.

7. Verfahren nach einem der Ansprüche 1 bis 6,
bei dem auf die Warnung ein Auftrag zur Korrektur einer Anordnung und/oder erfassten Position der jeweiligen Basisstation erzeugt wird.

8. Verfahren nach Anspruch 7,
bei dem der Auftrag mittels einer Meldung an Betriebsführungs- und/oder Wartungspersonal für das Funkortungssystem übermittelt wird.

9. Verfahren nach einem der Ansprüche 1 bis 8,
bei dem sämtliche Basisstationen jeweils eine Sensoreinrichtung umfassen, die an der vorgegebenen Position der jeweiligen Basisstation den zumindest einen für die vorgegebene Position charakteristischen Referenz-Messwert erfasst.

10. Verfahren nach einem der Ansprüche 1 bis 9,
bei dem das Funkortungssystem ein zumindest RFID-basiertes Real-time Locating System ist.

11. Basisstation für ein Funkortungssystem zur Durchführung eines Verfahrens nach einem der Ansprüche 1 bis 10, wobei die Basisstation
- dafür ausgestaltet und eingerichtet ist, zusammen mit weiteren Basisstationen eine Position eines Transponders anhand von Funksignallaufzeiten zu ermitteln, wobei die Basisstationen jeweils an einer vorgegebenen Position angeordnet sind,
- eine Sensoreinrichtung umfasst, die dafür ausgestaltet und eingerichtet ist, an der vorgegebenen Position der Basisstation zumindest einen für die vorgegebene Position charakteristischen optischen, elektro-magnetischen, induktiven und/oder kapazitiven Referenz-Messwert zu erfassen, während des Betriebs des Funkortungssystems jeweils zyklisch und/oder fortlaufend aktuelle Messwerte zu ermitteln und diese mit dem Referenz-Messwert zu vergleichen,
- dafür ausgestaltet und eingerichtet ist, bei einer Abweichung des aktuellen Messwerts vom Referenz-Messwert eine Warnung zu signalisieren und/oder eine Meldung an eine Überwachungseinrichtung zur dortigen Signalisierung einer Warnung zu übermitteln.
